# EUROPÄISCHE PATENTSCHRIFT

(11) **EP 2 809 893 B1**
(45) Veröffentlichungstag und Bekanntmachung des Hinweises auf die Patenterteilung: **04.11.2015**
(21) Anmeldenummer: 12795431.1
(22) Anmeldetag: 04.12.2012
(51) Int. Cl.: F01L 1/18, B62D 65/10, F01L 1/08, F01L 1/24, F01L 1/34, F01L 13/00, F16K 31/524, F01L 1/20

(54) **VENTILHUBSTELLANORDNUNG FÜR EINE MECHANISCH STEUERBARE VENTILTRIEBANORDNUNG SOWIE VERFAHREN ZUM AUSRICHTEN EINER ZWISCHENHEBELANORDNUNG**
VALVE LIFT ADJUSTMENT ARRANGEMENT FOR A MECHANICALLY CONTROLLABLE VALVE DRIVE ARRANGEMENT, AND METHOD FOR ALIGNING AN INTERMEDIATE LEVER ARRANGEMENT
ENSEMBLE DE RÉGLAGE DE LA LEVÉE DE SOUPAPE POUR UN ENSEMBLE DE COMMANDE DE SOUPAPES POUVANT ÊTRE ACTIONNÉ MÉCANIQUEMENT, AINSI QUE PROCÉDÉ D'ALIGNEMENT D'UN ENSEMBLE DE LEVIERS INTERMÉDIAIRES

(30) Priorität: 30.01.2012 DE 102012001633
(43) Veröffentlichungstag der Anmeldung: 10.12.2014
(73) Patentinhaber: Kolbenschmidt Pierburg Innovations GmbH, 74172 Neckarsulm (DE)
(72) Erfinder: FLIERL, Rudolf, 92242 Hirschau (DE); LAUER, Frederic, 71739 Oberriexingen (DE)
(74) Vertreter: Patentanwälte ter Smitten Eberlein Rütten Partnerschaftsgesellschaft
(86) Internationale Anmeldenummer: PCT/EP2012/074306
(87) Internationale Veröffentlichungsnummer: WO 2013/113429

(56) Entgegenhaltungen:
- DE-A1- 10 140 635
- DE-A1- 10 237 560
- DE-A1- 10 323 665
- DE-A1-102006 033 559
- DE-A1-102008 047 480
- GB-A- 113 428
- GB-A- 2 020 389
- GB-A- 2 428 451

## Beschreibung

Die Erfindung betrifft eine Ventilhubstellanordnung für eine mechanisch steuerbare Ventiltriebanordnung einer Brennkraftmaschine mit mindestens einer Zwischenhebelanordnung, wobei die Zwischenhebelanordnung mindestens einen Zwischenhebel mit einer Arbeitskurve aufweist, der mindestens über eine erste Rolle beweglich in einer Kulissenbahn gelagert ist und mit einer Nockenwellenanordnung und einer Ventilhubverstelleinrichtung in Wirkverbindung steht, wobei die Nockenwellenanordnung über eine weitere Rolle auf die Zwischenhebelanordnung einwirkt und wobei die Ventilhubverstelleinrichtung eine drehbare Exzenterwelle aufweist, die über eine zweite Rolle auf die Zwischenhebelanordnung einwirkt.

Des Weiteren betrifft die Erfindung ein Verfahren zum Ausrichten einer Zwischenhebelanordnung der Ventilhubstellanordnung sowie ein Verfahren zur Montage einer Ventilhubstellanordnung, d.h. einer Zwischenhebelanordnung auf einer Schwenkhebelanordnung.

Derartige Anordnungen sind im Brennkraftmaschinenbereich hinlänglich bekannt. Sie dienen insbesondere dazu, mittels der Ventilhubhöhe und damit dem Füllgrad der Zylinder der Brennkraftmaschine den Verbrennungsprozess den jeweiligen Lastanforderungen anzupassen und dementsprechend für eine möglichst effiziente und damit auch schadstoffarme Verbrennung zu sorgen.

In diesem Zusammenhang beschreiben die Druckschriften DE 101 40 635 A1, DE 103 23 665 A1, DE 10 2006 033 559 A1 und die DE 10 2007 022 266 A1 Ventiltriebanordnungen, die eine einstellbare Hubhöhe eines betreffenden Gaswechselventils aufweisen. Hierzu ist in beiden Ventiltriebanordnungen eine Zwischenhebelanordnung vorgesehen, die einerseits mit einer Nockenwelle in Verbindung steht, um das Gaswechselventil periodisch zu bewegen und andererseits ein Angriffsorgan aufweist, über das die maximal bzw. minimal zu erreichende Hubhöhe einstellbar ist. All diese Ventiltriebanordnungen weisen jedoch den Nachteil auf, dass nach Fertigung und nachfolgender Montage aufgrund von Fertigungstoleranzen die Ventiltriebanordnungen nicht den exakt gewünschten Ventilhub aufweisen. Bei der Anforderung eines genau voreingestellten Ventilhubs über alle Ventile und Zylinder kann das insbesondere bei geringen Ventilhüben zu einem unbefriedigenden Laufverhalten des Motors führen. Gründe hierfür sind einerseits im Aufbau und Zusammenwirken der Ventilhubstellanordnung an sich sowie in der Endmontage von Ventilhubstellanordnung und Schwenkhebelanordnung zu finden.

Insgesamt ergibt sich eine nur unter sehr großem Aufwand herstellbare und daher sehr teure Gesamtkonstruktion einer verstellbaren Ventiltriebanordnung.

Der Erfindung liegt daher die Aufgabe zugrunde, eine Ventilhubstellanordnung für eine mechanisch steuerbare Ventiltriebanordnung; ein Verfahren zum Ausrichten einer Zwischenhebelanordnung der Ventilhubstellanordnung, sowie ein Verfahren zur Montage einer Ventilhubstellanordnung zu schaffen, so dass die oben beschriebenen Nachteile vermieden werden können.

Diese Aufgabe wird erfindungsgemäß dadurch gelöst, dass eine exzentrisch gelagerte Lagerachse vorgesehen ist, derart, dass die zweite Rolle exzentrisch gelagert ist und einen Werkzeugangriffspunkt zur Ausrichtung der zweiten Rolle und damit der Zwischenhebelanordnung aufweist, wobei an beiden Seiten der Lagerachse eine Hülse oder ein Absatz vorgesehen ist, wodurch die exzentrische Anordnung der Lagerachse gewährleistet ist, derart, dass ein Umfangspunkt der zweiten Rolle bei Verdrehung um einen Winkel α eine von einem Kreisbogen abweichende Bogenform beschreibt. Als sekundärer Stand der Technik sind in diesem Zusammenhang die Druckschriften GB 113 428 A, GB 2 428 451 A, DE 102 37 560 A1, GB 2 020 389 A zu nennen, aus denen es bekannt ist, Rollen exzentrisch zu lagern. Durch die erfindungsgemäße Ausgestaltung einer derartigen Ventilhubstellanordnung ist es möglich, eine Ventiltriebanordnung im vormontierten Zustand auf einfache und kostengünstige Weise hinsichtlich der korrekten Ausrichtung der Zwischenhebelanordnung auf der Schwenkhebelanordnung einzustellen. Fertigungstoleranzen bzw. - fehler können zudem auf diese Weise bereits vor der Endmontage und der ersten Inbetriebnahme erkannt werden und eventuell auch ausgeglichen oder behoben werden. Durch das einfache Ausrichten des exzentrisch auf der Lagerachse befestigten Mittels ist zudem eine einfache Form der Ausrichtung im vormontierten Zustand geschaffen worden. Die optimale Ausrichtung der Hülse wird bei der Montage mit einem speziellen Werkzeug durchgeführt. Für die optimale Ausrichtung weist die Hülse den Werkzeugangriffspunkt auf. Alternativ kann ein Absatz vorgesehen sein. Dieser Absatz ist an beiden Seiten der Lagerachse jeweils exzentrisch zu dieser Lagerachse vorgesehen und dabei innerhalb des Zwischenhebels angeordnet. Die Absätze sind unterschiedlich groß ausgeführt, so dass eine Montage von der Seite möglich ist, während die Rolle von vorne in den Zwischenhebel eingeschoben wird.

Besonders vorteilhaft ist es in dem Zusammenhang, wenn der Werkzeugangriffspunkt über die Hülse zur exzentrischen Verstellung der zweiten Rolle auf der Lagerachse als mehrseitige Anschlussgeometrie ausgeführt ist. Hierbei kann der Werkzeugangriffspunkt derart ausgeführt sein, dass das die Hülse eine mehrseitige, Geometrie zum Anbringen des Werkzeuges aufweist. Diese Ausführungsform bietet insbesondere den Vorteil, dass das Angriffsorgan in einfacher Weise in Massenfertigung herstellbar ist. Hierbei ist es montage- und fertigungstechnisch besonders vorteilhaft, wenn das Angriffsorgan einteilig ausgeführt ist.

Um eine eindeutige Zuordnung der Ventilstellanordnung in Bezug auf die Schwenkhebelanordnung zu gewährleistet, weist die Ventilhubstellanordnung Referenzmarkierungen auf. Diese Referenzmarkierungen an der Zwischenhebelanordnung dienen dazu mit entsprechenden Referenzmarkierungen der Schwenkhebelanordnung bei der Endmontage zusammen zu wirken und so eine optimale Ausrichtung zu gewährleisten.

Auch wird die Erfindung durch ein Verfahren zum Ausrichten einer Zwischenhebelanordnung in einer Ventilhubstellanordnung gelöst, bei der außerhalb der Ventilhubstellanordnung eine Wegmessvorrichtung mit einer Steuereinheit vorgesehen wird; dass der Zwischenhebel in Bezug auf die Wegmessvorrichtung bewegt wird und somit die Arbeitskurve abgefahren wird; dass die mittels der Wegmessvorrichtung erzielten Messwerte mit Referenzwerten in der Steuereinheit verglichen werden und dass bei Abweichung der durch die Wegmessvorrichtung registrierten Messwerte von den Referenzwerten eine Justage der Zwischenhebelanordnung über den Wegzeugangriffspunkt der Hülse durch ein Verdrehen des Mittels bzw. der zweiten Rolle auf der Lagerachse durchgeführt wird.

Des Weiteren wird die Aufgabe der Erfindung dadurch gelöst, dass Fixiermittel vorgesehen sind, derart, dass nach der Justage die Position der zweiten Achse über die Fixiermittel fixiert wird.

Besonders vorteilhaft sind Fixiermittel, welche formschlüssig und/ oder kraftschlüssig wirken. Diese Fixiermittel können beispielsweise durch Bolzen und/oder Nuten realisiert werden. Dabei ist es montage- und fertigungstechnisch besonders vorteilhaft, wenn die Verbindung für den Anwendungsfall eines Bauteilversagens wieder lösbar ist und das defekte Bauteil auf einfache Art und Weise ausgetauscht werden kann.

In einer weiteren Ausführungsform sind die Fixiermittel stoffschlüssige Mittel, beispielsweise durch Schweiß- und/oder Lötpunkte. Stoffschlüssige Fixiermittel weisen den Vorteil auf, dass sie eine einfache, sichere und stabile Fixierung darstellen.

Zur Erfassung des Abstandes zwischen der Kontur der Arbeitskurve des Zwischenhebels und den Referenzwerten der Schwenkhebelanordnung können allgemein übliche Wegmessvorrichtungen verwendet werden. Beispielhaft können als Wegmessvorrichtung kapazitive oder induktive Abstandssensoren, ein Messtaster mit Glasmessstab, ein Messtaster mit Widerstandspotentiometer, ein Messtaster mit induktiver Erfassung, eine Messtaster mit LVDT (Positionssensoren)-Erfassung oder ein Messvorrichtung auf Basis der Laserinterferometrie vorgesehen werden. Derartige Messverfahren haben sich durch ihre Präzision in der Praxis außerordentlich bewährt.

Bei einem besonders vorteilhaften erfindungsgemäßen Verfahren zur Montage einer Ventilhubstellanordnung, d.h. einer Zwischenhebelanordnung auf einer Schwenkhebelanordnung wird eine Übereinstimmung der Referenzmarkierungen der Zwischenhebelanordnung mit den Referenzmarkierungen der Schwenkhebelanordnung realisiert. Nach Erzielung der Übereinstimmung der Referenzmarkierungen wird eine Endmontage der Zwischenhebelanordnung mit der Schwenkhebelanordnung vorgenommen.

Die Erfindung wird nachfolgend anhand der Zeichnungen näher erläutert, hierzu zeigen:
- Figur 1: bevorzugte Ausführungsform der erfindungsgemäßen Vorrichtung der Ventilhubstellanordnung,
- Figur 2: zeigt eine perspektivische Ansicht einer Ausführungsform einer erfindungsgemäßen Wegmessvorrichtung, und
- Figur 3: zeigt eine Schnittansicht einer Zwischenhebelanordnung.

Der nachfolgend mechanische Ventiltrieb ist hinlänglich unter dem Namen "Univalve" bekannt. Hinsichtlich des Aufbaus und der Funktionsweise eines derartigen Ventiltriebes wird auf die EP 1 618 293 B1 verwiesen.

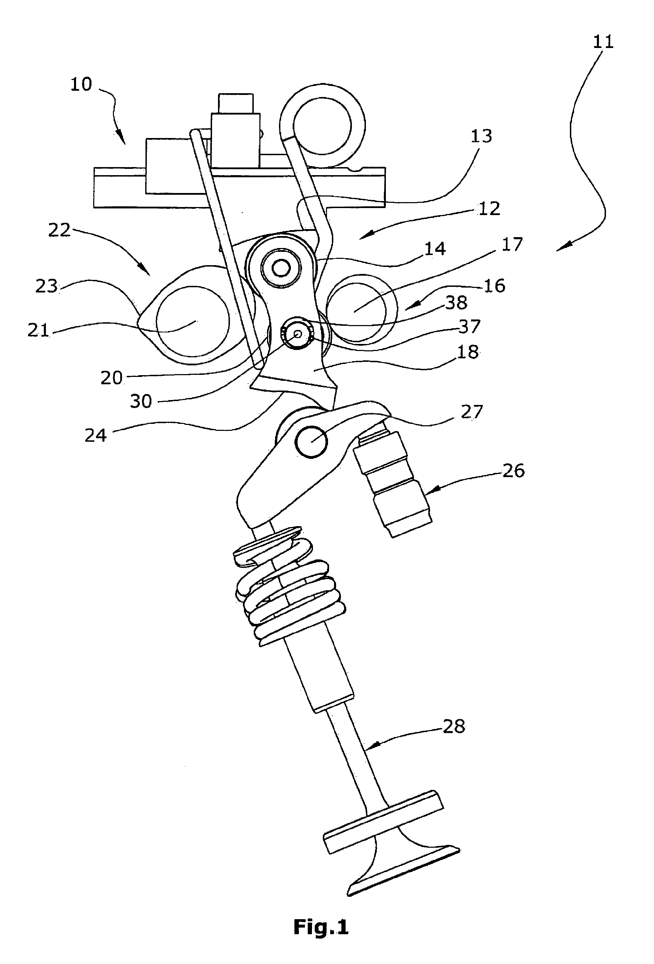

Eine bevorzugte Ausführungsform einer Ventilhubstellanordnung 10 für eine mechanisch steuerbare Ventiltriebanordnung 11 ist in Figur 1 dargestellt. Die Ventilhubanordnung 10 für eine Hubkolbenmaschine besteht im Wesentlichen aus einer Zwischenhebelanordnung 12 und einer Schwenkhebelanordnung 26. Die Zwischenhebelanordnung 12 weist einen Zwischenhebel 18 auf, der schiebebeweglich in einer Kulissenbahn einer Kulisse 13 gelagert ist, die ortsfest in einem nicht dargestellten Zylinderkopf angeordnet ist. Die Kulissenform ist dabei durch einen Kreisbogen bestimmt, der um einen Achsmittelpunkt einer dritten Rolle 27 verläuft. Im Bereich dieser ersten Rolle 14 ist eine Nockenwellenanordnung 22 vorgesehen. Die Nockenwellenanordnung 22 weist eine Nockenwelle 21 auf, die mit einem ersten Nocken 23 direkt oder indirekt verschoben werden kann und dadurch ein Gaswechselventil 28 antreibt. Mit der Nockenwelle 21 wird das Gaswechselventil 28 zyklisch geöffnet und geschlossen, sofern eine Wirkverbindung zwischen der Arbeitskurve 24 und der dritten Rolle 27 der Schlepphebelanordnung 26 besteht. Es sind natürlich auch alternative Ausführungsformen von Zwischenhebeln durch die Erfindung erfasst. So können zwei Zwischenhebel auf einer Achse mit einer Rolle angeordnet sein, wobei diese Rolle dann in einer Kulisse geführt ist. In diesem Zusammenhang kann auf die DE 10 140 635 A1 verwiesen werden.

Koaxial zur ersten Rolle 14 und in etwa mittig zwischen der Kulissenbahn 13 und der Arbeitskurve 24 ist eine Ventilhubverstelleinrichtung 16 mit einer zweiten Rolle 20 angeordnet. Mit der Ventilhubverstelleinrichtung 16 werden der Absoluthub des Gaswechselventils 28 sowie die Öffnungszeiten des Ventils eingestellt. Die Ventilhubverstelleinrichtung 16 weist hierzu auf bekannte Weise eine Exzenterwelle 17 auf.

Am gegenüberliegenden Ende zur Kulissenbahn 13 weist der Zwischenhebel 18 die Arbeitskurve 24 mit einem Nullhubabschnitt, einem Verstellhubabschnitt und einem Ventilhubstillstandsabschnitt auf.

Des Weiteren steht der Zwischenhebel 18 über die dritte Rolle 27 mit einer Schlepphebelanordnung 26 in Wirkverbindung. Über diese Wirkverbindung sind verschiedene Ventilhubpositionen des Gaswechselventils 28 ansteuerbar. Die Schlepphebelanordnung 26 ist einerseits auf einem Spielausgleichselement, vorzugsweise einem hydraulischen Ventilspielausgleichselement gelagert und wirkt mit dem Gaswechselventil 28. Das Gaswechselventil 28 und das Ventilspielausgleichselement sind in dem hier nicht dargestellten Zylinderkopf montiert.

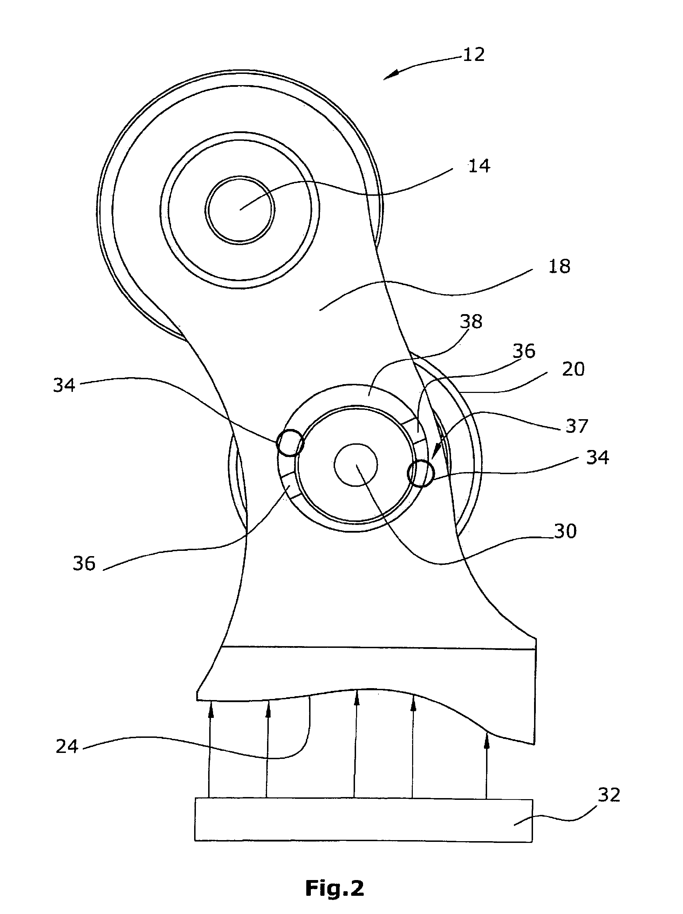

Figur 2 zeigt einen Ausschnitt der Ventilhubstellanordnung 10. In dieser Figur ist die Zwischenhebelanordnung 12 mit der erfindungsgemäßen Wegmessvorrichtung 32 dargestellt. Die Wegmessvorrichtung 32 ist dabei unterhalb der Arbeitskurve 24 angeordnet, da die Kontur der Arbeitskurve 24 durch die Wegmessvorrichtung 32 vermessen werden soll.

Der Werkzeugangriffspunkt 36 ist im vorliegenden Ausführungsbeispiel in einer Hülse 38 integriert und weist auf bekannte Weise zwei schlitzförmige Aussparungen auf. Durch die Verdrehung der Hülse 38 über die Betätigung des Werkzeugangriffspunktes 36 ist die Lagerachse 30 in einer bestimmten Drehposition verstellbar und anschließend fixierbar. Durch das einfache Verdrehen der exzentrisch gelagerten Lagerachse 30 während einer Vormontage kann nun der Ventilhub des zugehörigen Gaswechselventils 28 justiert werden und auf diese Weise können Fertigungsungenauigkeiten erkannt und eine korrekte Ausrichtung des Zwischenhebels 18 ausgeführt werden. Durch die dargestellte Ausführungsform ist ein Höchstmaß an Flexibilität bei der Einstellung der Ventilhubhöhe und der Position des Zwischenhebels 18 gegeben. Im Anschluss an die korrekte Ausrichtung des Zwischenhebels 18 wird die Position durch Schweißpunkt 34 im Bereich der zweiten Rolle 20 fixiert.

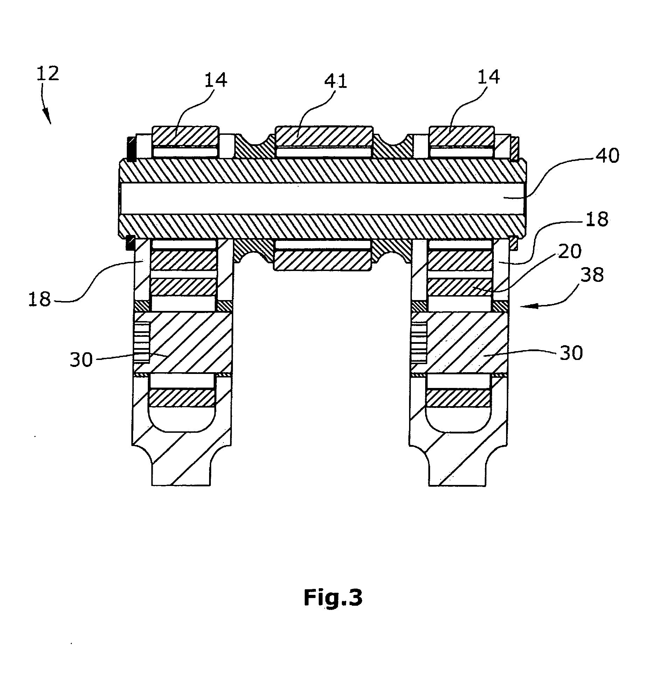

Die Figur 3 zeigt eine Zwischenhebelanordnung 12 mit zwei Zwischenhebeln 18, die auf einer gemeinsamen Verbindungsachse 40 angeordnet sind. Auf der Arbeitskurve 24 gegenüberliegenden Seite sind erste Rollen 14 angeordnet, mit denen die Zwischenhebelanordnung 12 mit der Nockenwelle 21 auf bekannte Weise in Wirkverbindung steht. Zwischen den ersten Rollen 14 ist hier noch eine vierte Rolle 41 auf der Verbindungswelle 40 angeordnet, die als Führungsrolle dient und in der Kulisse 13 (siehe Figur 1) abrollt. Hinsichtlich der Funktion und der Arbeitsweise einer derartigen Übertragungsanordnung wird explizit auf die deutsche Offenlegungsschrift DE 10 140 635 A1 verwiesen. Es sei darauf hingewiesen, dass eine Zwischenhebelanordnung 12 sowohl einen, als auch zwei Zwischenhebel aufweisen kann, wobei bei der Ausführung mit einem Zwischenhebel eine der Arbeitskurve 24 gegenüber gelegene Rolle sowohl mit der Nockenwelle 21 in Wirkverbindung steht, als auch die Führung in der Kulisse 13 gewährleistet.

Hier ist eine bevorzugte Ausführungsform der Lagerung der Lagerachse 30 eines Zwischenhebels 18 über beidseitig der Lagerachse 30 angeordnete Hülsen 38 dargestellt. Die optimale Ausrichtung der Hülsen 38 wird mit einem entsprechenden Werkzeug vorgenommen. Die Hülsen 38 sind jeweils rechts und links der Lagerachse 30 angeordnet.

Eine dazu abweichende, jedoch nicht weiter dargestellte Ausführungsform ist ein rechts und links exzentrisch zu der Lagerachse 30 angeordneter Absatz. Dieser Absatz ist dabei im Zwischenhebel 18 gelagert. Die exzentrisch angeordneten Absätze können dabei unterschiedlich groß ausgeführt sein, so dass eine Montage von der Seite möglich ist, während die Rolle 20 von vorne in den Zwischenhebel 18 eingeschoben werden kann.

## Patentansprüche

1. Ventilhubstellanordnung (10) für eine mechanisch steuerbare Ventiltriebanordnung (11), mit mindestens einer Zwischenhebelanordnung (12), wobei die Zwischenhebelanordnung (12) mindestens einen Zwischenhebel (18) mit einer Arbeitskurve (24) aufweist, der mindestens über eine erste Rolle (14) beweglich in einer Kulissenbahn (13) gelagert ist und mit einer Nockenwellenanordnung (22) und einer Ventilhubverstelleinrichtung (16) in Wirkverbindung steht, wobei die Nockenwellenanordnung (22) über eine weitere Rolle (41) auf die Zwischenhebelanordnung (12) einwirkt und wobei die Ventilhubverstelleinrichtung (16) eine drehbare Exzenterwelle (17) aufweist, die über eine auf einer Lagerachse (30) befindlichen zweiten Rolle (20) auf die Zwischenhebelanordnung (12) einwirkt, **dadurch gekennzeichnet, dass** die Lagerachse (30) exzentrisch gelagert ist, derart, dass die zweite Rolle (20) exzentrisch gelagert ist und einen Werkzeugangriffspunkt (36) zur Ausrichtung der zweiten Rolle (20) und damit der Zwischenhebelanordnung (12) aufweist, wobei an beiden Seiten der Lagerachse (30) eine Hülse (38) oder ein Absatz vorgesehen ist, wodurch die exzentrische Anordnung der Lagerachse (30) gewährleistet ist, derart, dass ein Umfangspunkt der zweiten Rolle (20) bei Verdrehung um einen Winkel α eine von einem Kreisbogen abweichende Bogenform beschreibt.

2. Ventilhubstellanordnung (10) für eine mechanisch steuerbare Ventiltriebanordnung (11) nach Anspruch 1, **dadurch gekennzeichnet, dass** der Werkzeugangriffspunkt (36) als mehrseitige Anschlussgeometrie ausgeführt ist.

3. Ventilhubstellanordnung (10) für eine mechanisch steuerbare Ventiltriebanordnung (11) nach Anspruch 1 oder 2, **dadurch gekennzeichnet, dass** die Ventilhubstellanordnung (10) Referenzmarkierungen zur eindeutigen Zuordnung in Bezug auf eine Schwenkhebelanordnung (26) aufweist.

4. Verfahren zum Ausrichten einer Zwischenhebelanordnung (12) einer Ventilhubstellanordnung (10) nach einem der Ansprüche 1 bis 3, **dadurch gekennzeichnet, dass**
• außerhalb der Ventilhubstellanordnung (10) eine Wegmessvorrichtung (32) mit einer Steuereinheit vorgesehen wird,
• der Zwischenhebels in Bezug auf die Wegmessvorrichtung bewegt wird und somit die Arbeitskurve abgefahren wird,
• die mittels der Wegmessvorrichtung (32) erzielten Messwerte mit Referenzwerten in der Steuereinheit verglichen werden,
• bei Abweichung der durch die Wegmessvorrichtung (32) registrierten Messwerte von den Referenzwerten eine Justage der Zwischenhebelanordnung (12) über den Werkzeugangriffspunkt (36) durch ein Verdrehen der zweiten Rolle (20) durchgeführt wird.

5. Verfahren zum Ausrichten einer Zwischenhebelanordnung (12) einer Ventilhubstellanordnung (10) nach Anspruch 4, **dadurch gekennzeichnet, dass** nach der Justage die Position der zweiten Rolle (20) über Fixiermittel (37) fixiert wird.

6. Verfahren zum Ausrichten einer Zwischenhebelanordnung (12) einer Ventilhubstellanordnung (10) nach Anspruch 5, **dadurch gekennzeichnet, dass** die Fixiermittel (37) aus formschlüssigen und/oder kraftschlüssigen Mitteln, wie beispielsweise Bolzen und/oder Nuten, bestehen.

7. Verfahren zum Ausrichten einer Zwischenhebelanordnung (12) einer Ventilhubstellanordnung (10) nach Anspruch 6, **dadurch gekennzeichnet, dass** die Fixiermittel (37) aus stoffschlüssigen Mitteln, insbesondere aus Schweißpunkten und/ oder Lötpunkten, bestehen.

8. Verfahren zum Ausrichten einer Zwischenhebelanordnung (12) einer Ventilhubstellanordnung (10) gemäß der Ansprüche 4 bis 7, **dadurch gekennzeichnet, dass** als Wegmessvorrichtung (32) kapazitive oder induktive Abstandssensoren, ein Messtaster mit Glasmessstab, ein Messtaster mit Widerstandspotentiometer, ein Messtaster mit induktiver Erfassung, ein Messtaster mit LVDT-Erfassung oder eine Messvorrichtung auf Basis der Laserinterferometrie vorgesehen wird.

9. Verfahren zur Montage einer Ventilhubstellanordnung (10), (26), nach den Ansprüchen 1 bis 3, **dadurch gekennzeichnet, dass** die Referenzmarkierung der Zwischenhebelanordnung (12) mit den Referenzmarkierungen einer Schwenkhebelanordnung (26) übereinstimmen und anschließend eine Endmontage vorgenommen wird.

## Claims

1. A valve lift adjustment arrangement (10) for a mechanically controllable valve drive arrangement (11), having at least one intermediate lever arrangement (12), wherein the intermediate lever arrangement (12) has at least one intermediate lever (18) with a working curve (24), which lever is mounted, at least by way of a first roller (14), movably in a slotted-guide track (13) and is operatively connected to a camshaft arrangement (22) and to a valve lift adjustment device (16), wherein the camshaft arrangement (22) acts, by way of a further roller (41), on the intermediate lever arrangement (12) and wherein the valve lift adjustment device (16) has a rotatable eccentric shaft (17) which acts, by way of a second roller (20) situated on the bearing shaft (30), on the intermediate lever arrangement (12), **characterized in that** the bearing shaft (30) is eccentrically mounted such that the second roller (20) is eccentrically mounted and has a tool engagement point (36) for the alignment of the second roller (20) and thus of the intermediate lever arrangement (12), wherein a sleeve (38) or a shoulder is provided on either side of the bearing shaft (30) whereby the eccentric arrangement of the bearing shaft (30) is guaranteed such that a circumferential point of the second roller (20), in the case of rotation through an angle α, describes an arc shape deviating from a circular arc.

2. The valve lift adjustment arrangement (10) for a mechanically controllable valve drive arrangement (11) of claim 1, **characterized in that** the tool engagement point (36) is designed as a polygonal connection geometry.

3. The valve lift adjustment arrangement (10) for a mechanically controllable valve drive arrangement (11) of claim 1 or 2, **characterized in that** the valve lift adjustment arrangement (10) has reference marks for a clear orientation with respect to a pivot lever arrangement (26).

4. A method for aligning an intermediate lever arrangement (12) of a valve lift adjustment arrangement (10) of one of claims 1 to 3, **characterized in that**
• a distance measuring device (32) with a control unit is provided outside the valve lift adjustment arrangement (10),
• the intermediate lever is moved relative to the distance measuring device, whereby the working curve is traveled along,
• the measured values obtained by means of the distance measuring device (32) are compared with reference values in the control unit,
• if the measured values detected by the distance measuring device (32) deviate from the reference values, an adjustment of the intermediate lever arrangement (12) is made via the tool engagement point (36) by turning the second roller (20).

5. The method for aligning an intermediate lever arrangement (12) of a valve lift adjustment arrangement (10) of claim 4, **characterized in that**, after the adjustment, the position of the second roller (20) is fixed using fixation means (37).

6. The method for aligning an intermediate lever arrangement (12) of a valve lift adjustment arrangement (10) of claim 5, **characterized in that** the fixation means (37) are formed by form-fitting and/or force-locking means, such as bolts and/or grooves, for example.

7. The method for aligning an intermediate lever arrangement (12) of a valve lift adjustment arrangement (10) of claim 6, **characterized in that** the fixation means (37) are bonding means, in particular welding points and/or soldering points.

8. The method for aligning an intermediate lever arrangement (12) of a valve lift adjustment arrangement (10) of claims 4 to 7, **characterized in that** the distance measuring device (32) may be provided in the form of capacitive or inductive distance sensors, a measuring sensor with a glass scale, a measuring sensor with a resistance potentiometer, a measuring sensor with inductive detection, a measuring sensor with LVDT detection, or a measuring device based on laser interferometry.

9. A method for the assembly of a valve lift adjustment arrangement (10) as defined in claims 1 to 3, **characterized in that** the reference mark of the intermediate lever arrangement (12) is caused to match with the reference marks of the pivot lever arrangement (26) and a final assembly is performed thereafter.

## Revendications

1. Ensemble (10) de réglage de la levée de soupape pour un ensemble (11) de commande de soupape pouvant être actionné mécaniquement, comprenant au moins un ensemble de levier intermédiaire (12), ledit ensemble de levier intermédiaire (12) comprend au moins un levier intermédiaire (18) avec une courbe de travail (24), ledit levier étant supporté de manière mobile dans une piste de coulisse (13) au moins par moyen d'un premier rouleau (14) et étant en liaison fonctionnelle avec un ensemble d'arbre à cames (22) et un ensemble d'ajustage de la levée de soupape (16), ledit ensemble d'arbre à cames (22) agissant sur ledit ensemble de levier intermédiaire (12) à travers un autre rouleau (41), et ledit ensemble d'ajustage de la levée de soupape (16) comprenant un arbre excentrique (17) rotatif agissant sur ledit ensemble de levier intermédiaire (12) à travers un deuxième rouleau (20) disposé sur un axe de support (30), **caractérisé en ce que** ledit axe de support (30) est supporté de manière excentrique de sorte que le deuxième rouleau (20) est supporté de manière excentrique et présente une prise d'outil (36) pour l'alignement du deuxième rouleau (20) et, par cela, dudit ensemble de levier intermédiaire (12), une douille (38) ou un épaulement étant disposé des deux côtés de l'arbre de support (30), ainsi garantissant la disposition excentrique de l'arbre de support (30) de sorte que, lors de la rotation par un angle α, un point du pourtour du deuxième rouleau (20) décrit une forme d'arc différent d'un arc de cercle.

2. Ensemble (10) de réglage de la levée de soupape pour un ensemble (11) de commande de soupape pouvant être actionné mécaniquement selon la revendication 1, **caractérisé en ce que** la prise d'outil (36) est réalisé sous forme d'une géométrie de raccordement polygonale.

3. Ensemble (10) de réglage de la levée de soupape pour un ensemble (11) de commande de soupape pouvant être actionné mécaniquement selon la revendication 1 ou 2, **caractérisé en ce que** l'ensemble (10) de réglage de la levée de soupape présente des répères de référence pour une association claire par rapport à un ensemble de levier pivotant (26).

4. Procédé d'alignement d'un ensemble de levier intermédiaire (12) d'un ensemble (10) de réglage de la levée de soupape selon l'une des revendications 1 à 3, **caractérisé en ce que**
• en dehors dudit ensemble (10) de réglage de la levée de soupape, l'on dispose un dispositif de mesure de déplacement (32) avec une unité de commande,
• ledit levier intermédiaire est déplacé par rapport au dispositif de mesure de déplacement, ainsi parcourant la courbe de travail,
• les valeurs mesurées obtenues par le dispositif de mesure de déplacement (32) sont comparées à des valeurs de référence dans l'unité de commande,
• lors d'une déviation des valeurs mesurées, enregistrées par le dispositif de mesure de déplacement (32), des valeurs de référence, un ajustage dudit ensemble de levier intermédiaire (12) est effectué par moyen de la prise d'outil (36) par rotation dudit deuxième rouleau (20).

5. Procédé d'alignement d'un ensemble de levier intermédiaire (12) d'un ensemble (10) de réglage de la levée de soupape selon la revendication 4, **caractérisé en ce qu'**après l'ajustage, la position du deuxième rouleau (20) est fixée par des moyens de fixation (37).

6. Procédé d'alignement d'un ensemble de levier intermédiaire (12) d'un ensemble (10) de réglage de la levée de soupape selon la revendication 5, **caractérisé en ce que** les moyens de fixation (37) sont des moyens de fixation par forme et/ou par serrage, par exemple des boulons et/ou des rainures.

7. Procédé d'alignement d'un ensemble de levier intermédiaire (12) d'un ensemble (10) de réglage de la levée de soupape selon la revendication 6, **caractérisé en ce que** les moyens de fixation (37) sont des moyens de liaison de la matière, à savoir des points de soudage et/ou des points de brasage.

8. Procédé d'alignement d'un ensemble de levier intermédiaire (12) d'un ensemble (10) de réglage de la levée de soupape selon l'une des revendications 4 à 7, **caractérisé en ce que** l'on prévoit comme dispositif de mesure de déplacement (32) des capteurs de distance capacitifs ou inductifs, un palpeur de mesurage avec un règle en verre, un palpeur de mesurage avec potentiomètre, un palpeur à détection inductive, un palpeur à détection LVDT ou un dispositif de mesurage sur la base de l'interférométrie laser.

9. Procédé d'assemblage d'un ensemble (10) de réglage de la levée de soupape selon l'une des revendications 1 à 3, **caractérisé en ce que** le répère de référence dudit ensemble de levier intermédiaire (12) sont mises en correspondance avec les répères de référence d'un ensemble de levier pivotant (26), et **en ce qu'**ensuite, l'assemblage final est effectué.
